(19) **Europäisches Patentamt**

**European Patent Office**

**Office européen des brevets**

(11) **EP 1 099 674 A1**

(12) **EUROPEAN PATENT APPLICATION**

(43) Date of publication:
**16.05.2001 Bulletin 2001/20**

(51) Int Cl.⁷: **C04B 38/00**, G03G 15/20, B05C 1/00, C04B 30/02

(21) Application number: **00122773.5**

(22) Date of filing: **19.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.11.1999 JP 32122799**

(71) Applicant: **Nichias Co., Ltd.**
**Tokyo 105-8555 (JP)**

(72) Inventors:
• **Kohichi, Kimura, c/o NICHIAS CO., LTD.**
**Hamamatsu-shi, Shizuoka (JP)**
• **Tatsuo, Takagi, c/o NICHIAS CO., LTD.**
**Hamamatsu-shi, Shizuoka (JP)**

• **Osamu, Horiuchi, c/o NICHIAS CO., LTD.**
**Hamamatsu-shi, Shizuoka (JP)**
• **Munehiko, Fukase, c/o NICHIAS CO., LTD.**
**Hamamatsu-shi, Shizuoka (JP)**
• **Toshiyuki, Kishida, c/o NICHIAS CO., LTD.**
**Hamamatsu-shi, Shizuoka (JP)**
• **Tsuyoshi, Kuboyama, c/o NICHIAS CO., LTD.**
**Hamamatsu-shi, Shizuoka (JP)**

(74) Representative:
**Müller-Wolff, Thomas, Dipl.-Ing. et al**
**HARWARDT NEUMANN**
**Patent- und Rechtsanwälte,**
**Brandstrasse 10**
**53721 Siegburg (DE)**

(54) **Porous ceramics, coating liquid retaining member, coating liquid application device and manufacturing method for porous ceramics**

(57)     The porous ceramics according to the present invention are made of heat resistant inorganic material having minute gaps and pores on the inside. At least some of the minute gaps communicate with a surface and pores of the porous ceramics and 40% or more of the total minute gap volume comprises minute pores with diameters of 30 to 200µm. The pores have an average pore size of 200 to 2000µm, and at least some of the pores communicate with the porous ceramics surface through the minute gaps. By using a coating liquid retaining member made of porous ceramics in a coating liquid application device, coating liquid with comparatively low viscosity can be used. This enables application of constant amount of coating liquid over a long time even under high load conditions.

EP 1 099 674 A1

**Description**

Background of the Invention

The present invention relates to porous ceramics and a manufacturing method thereof and a coating liquid application device for a fixing device such as an electrostatic process copying machine or an electrophotographic printer, and more particularly to a coating liquid retaining member obtained by using the porous ceramics and a coating liquid application device using the same.

A thermal fixing roller used in electrostatic process copying machines and electrophotographic printers fix toner which had been transferred onto recording paper or OHP paper by pressurizing and heating. Since the thermal fixing roller comes into contact with paper and toner, toner adhering to the surface of the roller stains the paper. Accordingly, a minute amount of coating liquid such as silicone oil, which is a mold lubricant oil, is applied to the thermal fixing roller surface to prevent adhesion of toner.

Conventionally, a device comprising an application member such as felt wrapped around a coating liquid retaining member that retains coating liquid was known as a device for applying coating liquid. Japanese Unexamined Patent Application HEI 9-108601 discloses a coating liquid retaining member which is made of porous ceramics comprising heat resistant fibers bonded together by a bonding agent, and having a minute communicating gap without any bonding agent between the fibers and a group of uniformly distributed pores with pore sizes of 0.05 to 2 mm, with a total gap ratio of 30 to 90%. With this coating liquid retaining member, it is possible to retain the coating liquid at a high volume ratio and stably discharge it over a long time under high load conditions.

For example, in a first embodiment of the aforementioned reference, after the coating liquid retaining member is impregnated with silicone oil, an application member made of felt is wrapped around an outer periphery of the retaining member to form a silicone oil application roller with a double layer structure. In this embodiment, the felt not only acts as an application member, but also acts as a coating liquid migration layer which absorbs the coating liquid from the coating liquid retaining member through capillary force owing to the difference in the pore sizes of the coating liquid retaining member and the felt, and thermal expansion of the coating liquid. The silicone oil application roller disclosed in the above-mentioned reference allows coating liquid to be retained at a high volume ratio while stably discharging it over a long time under high load conditions by adopting a double layer structure combining the felt with a coating liquid retaining member having the specific structure mentioned above. That is, using this silicone oil application roller, it is possible to maintain oil discharge amount and oil discharge rate at a preferable level for over 100, 000 sheets under a continuous feed of 32 sheets/minute.

However, with the double layer structure silicone oil application roller in the above-mentioned reference, since the felt serves both a function of determining coating liquid migration speed from the coating liquid retaining member to the felt and a function of determining the coating liquid application speed from the felt to the coating liquid application surface, the functions cannot be controlled independently. As a result, when the amount of coating liquid in the coating liquid retaining member decreased due to long term use or when the coating liquid retaining member is under high load condition with a high paper feed speed, migration of the coating liquid from the coating liquid retaining member to the felt sometimes fell behind and therefore the coating liquid was not applied sufficiently.

Also, in recent years, a large amount of coating liquid application is required in color printing, and therefore a coating liquid with comparatively low viscosity is used. However, when the viscosity of the coating liquid is comparatively low, oil tends to be discharged in excess, which leads to oil leaking. Consequently, it was difficult to discharge the coating liquid over a long time under high load conditions.

As a means for overcoming such drawbacks, the applicant of the present invention has previously proposed a three layer structure coating liquid application device including a coating liquid retaining member made of porous ceramic, a felt layer provided on the coating liquid retaining member surface, and a porous film layer of PTFE or the like provided on the felt layer (Japanese Unexamined Patent Application HEI 10-202868, HEI 11-45900). According to the coating liquid application device, the coating liquid migration speed from the coating liquid retaining member to the felt layer and the coating liquid application speed from the felt layer to the coating liquid application surface can be controlled independently according to the selection of material for each. Consequently, by making the coating liquid migration speed faster than the coating liquid application speed, the felt layer retains the coating liquid, while the coating liquid application speed from the felt layer to the application surface is controlled with porous film layer to enable application of a constant amount of coating liquid over a long time.

However, while forming a three layer structure coating liquid application device having a porous film layer using the coating liquid retaining member in the above-mentioned reference, enables application of a constant amount of coating liquid over a long time, the absolute volume of the coating liquid application amount was small. That is, because the conventional coating liquid retaining member is meant to be used together with a felt layer in a double layer structure coating liquid application device, it is designed such that the coating liquid application speed is not too high. Accordingly, the coating liquid migration speed is low. As a result, the coating liquid migration speed of the above-mentioned coating liquid retaining member is too low for a three layer structure coating liquid application device, and the absolute volume of the application amount of the coating liquid is small. Consequently, it was difficult to apply a constant amount of coating liquid over a long time under high load conditions such as when the number of sheets fed per unit time is large.

Accordingly, an object of the present invention is to provide porous ceramics with a structure that enables the coating liquid migration speed to be sufficiently increased, allows a coating liquid with comparatively low viscosity to be used, and that allows application of a constant amount of coating liquid over a long time even under high load conditions and a method for manufacturing those porous ceramics, as well as to provide a coating liquid retaining member made of the aforementioned porous ceramics, and to provide a coating liquid application device.

Disclosure of the Invention

Under such circumstances, the inventor found after a thorough investigation, that porous ceramics made of heat resistant inorganic material with minute gaps and pores on the inside, wherein at least some of the minute gaps communicates with a surface and pores of the porous ceramics and a specific amount of the total minute gap volume has a specific diameter, and at least some of the pores communicate with the porous ceramics surface through the minute gap and has a specific pore size, such porous ceramics may be used as a coating liquid retaining member to sufficiently increase the coating liquid migration speed and that it allows application of a constant amount of coating liquid over a long time.

Therefore, the present invention provides porous ceramics made of heat resistant inorganic material with minute gaps and pores on the inside, wherein at least some of the minute gaps communicates with a surface and the pores of the porous ceramics and 40 % or more of the total minute gap volume consists of minute pores with diameters of 30 to 200μm, and at least some of the pores communicate with the porous ceramics surface through the minute gaps and the pores have an average pore size of 200 to 2000 μm. Here, "40 % or more of the total minute gap volume is made of pores with 30 to 200 μm" means that the total of minute gaps with pore sizes between 30 and 200 μm is 40 % or more of the total minute gaps in terms of volume.

Further, the present invention provides a coating liquid retaining member which is made of the aforementioned porous ceramics.

Yet further, the present invention provides a coating liquid application device wherein a felt layer is formed on the surface of the aforementioned coating liquid retaining member.

Still further, the present invention provides a coating liquid application device wherein a PTFE porous film layer is formed on the surface of the felt layer.

Further, the present invention provides a manufacturing method for porous ceramics , comprising the steps of forming a mixture comprising 100 parts by weight of heat resistant fiber with an average fiber diameter of 6 to 30μm and an average fiber length of 0.1 to 10 mm, 5 to 300 parts by weight of inorganic bonding material, 1 to 100 parts by weight of organic bonding material, 1 to 300 parts by weight of water resistant granular organic material, and 50 to 300 parts by weight of water, molding the mixture, drying it, degreasing it, and then baking it at 400 to 1500°C.

Further, the present invention provides a manufacturing method for porous ceramics , comprising the steps of forming a mixture comprising 100 parts by weight of heat resistant fiber with an average fiber diameter of 1 to 30μm and an average fiber length of 0.03 to 100 mm, 10 to 200 parts by weight of water resistant inorganic filler with an average grain size of 0.01 to 2mm, 5 to 300 parts by weight of inorganic bonding material, 1 to 100 parts by weight of organic bonding material, 1 to 300 parts by weight of water resistant granular organic material, and 50 to 300 parts by weight of water, molding the mixture, drying it, degreasing it, and baking it at 400 to 1500°C.

Brief Description of the Drawings

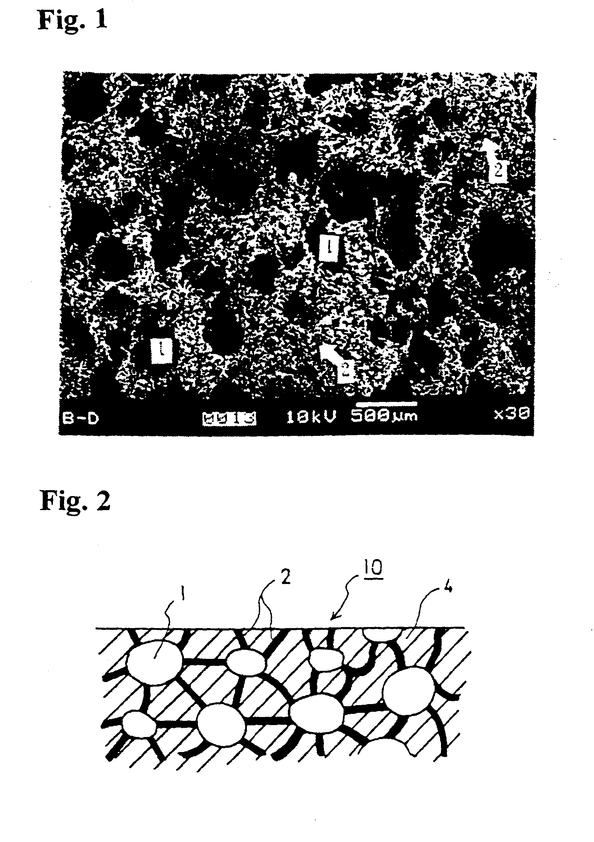

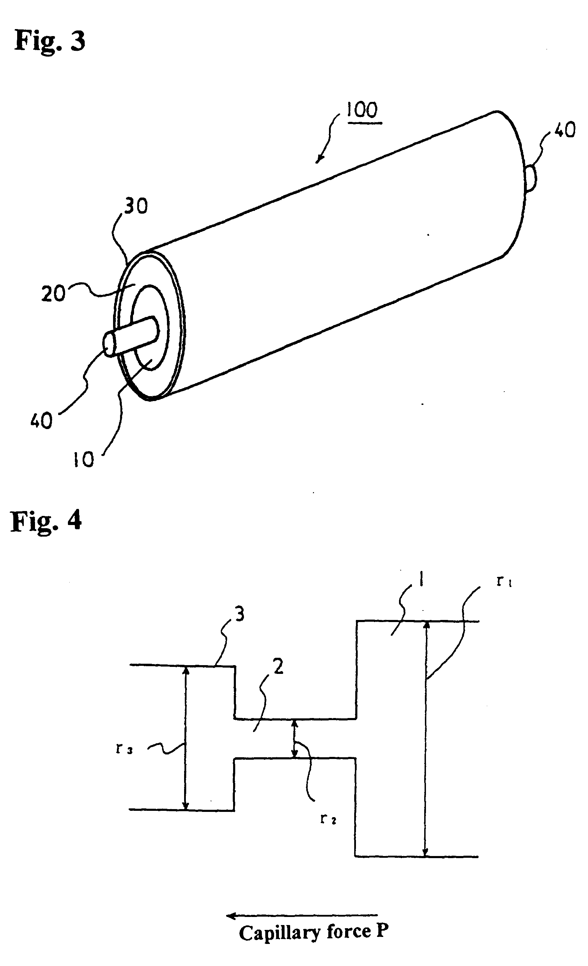

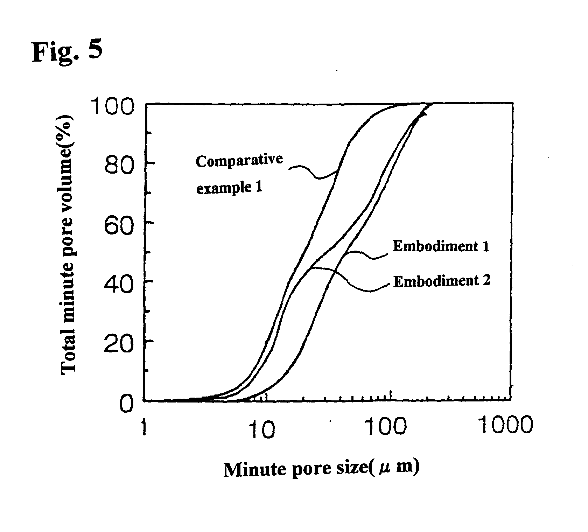

Fig. 1 is an SEM (scanning electron microscope) photograph (x30 magnification) of a broken-out section of the porous ceramics according to the present invention. Fig. 2 is a typical illustration of a cross section of the porous ceramics according to the present invention. Fig. 3 is a typical illustration of a coating liquid application device according to the present invention. Fig. 4 is a basic illustration explaining a soak out mechanism of coating liquid. Fig. 5 is a graph showing the measurement data of total pore volume of an embodiment and a comparative example.

Detailed Description

First, the porous ceramics according to the present invention will be described. Heat resistant inorganic material constituting the porous ceramics according to the present invention is an inorganic material chemically and mechanically stable with heating at 400°C or more, and more preferably at 600°C or more. The heat resistant inorganic material is not specified in particular. However, such heat resistant inorganic material may include, for example, a material formed by bonding heat resistant fibers or heat resistance fibers with water resistant inorganic filler to each other by inorganic bonding material.

Heat resistant fibers are aggregates which form gaps between fibers by being bonded to each other with inorganic bonding material. Heat resistant fibers include, for example, glass fiber, rock wool, aluminosilicate fiber, and alumina fiber, and the like, of which glass fiber is most preferable for its large fiber diameter and high heat resisting temperature. One type or combination of two or more types of above-mentioned heat resistant fibers may be used.

Water resistant inorganic fillers are inorganic aggregates which fill the gaps between fibers formed when heat resistant fibers are bonded with inorganic bonding material, and which adjust the amount of gaps between fibers. Such water resistant inorganic fillers include, for example, powders of silica, alumina, kaolin, bentonite, gairome clay, kibushi clay, and the like, and preferably powders of which the grain size can be controlled. One type or a combination of two or more types of water resistant inorganic fillers may be used.

Inorganic bonding materials include, for example, sodium silicate, colloidal silica, alumina sol, lithium silicate, glass frit, and the like, of which sodium silicate is most preferable for its comparatively low baking temperature and high strength. One type or a combination of two or more types of inorganic bonding materials may be used.

The porous ceramics according to the present invention has minute gaps and pores on the inside. Diameters of the minute gaps are distributed substantially in the range of approximately 1 to 200 $\mu$m. In particular, the ratio of the diameters falling in the range of 30 to 200 $\mu$m is 40% or more and more preferably 50% or more, and yet more preferably 60% or more of the total minute gaps in the porous ceramics. If the ratio of volume of minute gaps is less than 40%, the coating liquid migration speed becomes slow, which is undesirable. At least some of the total minute gap present in the porous ceramics communicate with the surface and pores of the porous ceramics.

The pores are spherical or elliptic cavities with average pore sizes of 200 to 2000$\mu$m and preferably 300 to 500$\mu$m which preferably are distributed substantially uniformly in the porous ceramics. If the average pore size is less than 200$\mu$m, the difference between the pore size with respect to the minute gap and felt layer minute pore is small. This decreases the capillary force acting from the pore to the surface of the porous ceramics, and thus is not desirable. Also, if the pore size exceeds 2000$\mu$m, coating liquid retaining power decreases drastically and leads to the liquid leaking. Also, coating liquid application performance fluctuates over time so that stable application performance cannot be displayed for a long time. Thus, pore sizes over 2000$\mu$m are not desirable. At least some of all pores present in the porous ceramics communicate with the surface of the porous ceramics through aforementioned minute gaps.

The ratio of the total pore volume with respect to the bulk volume of porous ceramics (also referred to as porosity) should preferably be 10 to 50% and more preferably be 20 to 40%. It is not desirable for porosity to exceed 50% because the oil retaining power decreases and it becomes difficult to obtain capillary force. Also, the ratio of the total volume of the pores and minute gaps with respect to the bulk volume of porous ceramics (also referred to as total porosity) is preferably 40 to 90% and more preferably 60 to 80%. It is preferable that the total porosity be in the aforementioned range to increase the oil migration power and the oil retaining power.

Examples of detail structure of the porous ceramics according to the present invention thus configured are shown in Fig. 1 and Fig. 2. Fig. 1 is a SEM (scanning electron microscope) photograph (x30 magnification) of a broken-out section of porous ceramics according to the present invention. Fig. 2 is a typical illustration of a cross section of the porous ceramics according to the present invention. In Fig. 1 and Fig. 2, reference numeral 1 denotes a pore, reference numeral 2 denotes a minute gap, reference numeral 4 denotes a heat resistant inorganic material, and reference numeral 10 denotes porous ceramics. As shown in Fig. 1 and Fig. 2, at least some of the minute gaps 2 communicate with the surface and pores 1 of the porous ceramics 10, and at least some of the pores 1 communicate with the porous ceramics 10 surface through the minute gaps 2. The minute gap 2 is present inside the heat resistant inorganic material 4 as a minute gap, whereas the pore 1 is present in the heat resistant inorganic material 4 as a cavity with a larger diameter than the minute gap 2.

In the porous ceramics according to the present invention, the mechanism of the coating liquid seeping out from pores inside the porous ceramics to the surface of porous ceramics through a minute gap will be described with reference to Fig. 3 and Fig. 4. Fig. 3 typically shows a coating liquid application device which employs the porous ceramics according to the present invention as the coating liquid retaining member, on which a felt layer is provided and a PTFE film layer is formed on the felt layer as a porous film layer. Fig. 4 is a basic illustration explaining the aforementioned mechanism of soaking out. In Fig. 3, reference numerals 10 denotes porous ceramics, reference numeral 20 denotes a felt layer, reference numeral 30 denotes PTFE porous film layer, reference numeral 40 denotes a shaft, and reference numeral 100 denotes a coating liquid application device. In Fig. 4, reference numerals 3, $r_1$, $r_2$, and $r_3$ denote a minute pore in the felt layer, pore diameter, diameter of a minute gap, and a pore size of the felt layer, respectively. Members identical to those referenced in Fig. 1 and Fig. 2 are denoted with the same reference numerals so their descriptions are omitted.

In Fig. 3 and Fig. 4, the pore 1 communicates with the minute pore 3 of the felt layer through the minute gap 2. Coating liquid that is mainly retained in the pore 1 in the porous ceramics 10 migrates to the felt layer 20 by a capillary force P determined by the following formula (1) expressed in terms of $r_1$, $r_3$, and surface tension of coating liquid $\gamma$.

$$P = 2 \gamma (1/r_3 - 1/r_1) \tag{1}$$

This means that in order for the coating liquid to migrate from the porous ceramics 10 to the felt layer 20, $r_3 < r_1$ must be satisfied.

Next, a migration speed V of the coating liquid is calculated by substituting the capillary force P into the following formula (2), since usually $r_2 < r_1$ is satisfied and therefore the minute gap 2 becomes the rate-determining factor.

$$V = \pi P r_2^4/8 \eta L \tag{2}$$

(In formula (2), $\eta$ represents the viscosity of the coating liquid and L represents the length of the minute gap 2.) That is, from formulas (1) and (2), to increase the migration speed V of the coating liquid, the diameter $r_2$ should be made large under a condition in which the pore diameter $r_1$ is larger than the minute pore diameter $r_3$ of the felt layer. The range of numerical value defined as diameters of the pores and the minute gaps of the porous ceramics according to the present invention is represented by a relationship, $r_1 > r_3 > r_2$. Here, the minute gap 2 functions as a pipe for capillary action that works between the pore 1 and the minute pore 3. This allows effective retaining of coating liquid in the pore 1 of the porous ceramics 10. Further, it is possible to effectively generate capillary force between the pore 1 and the minute pore 3 of the felt layer 20. Also, the migration of coating liquid moving in the minute gap 2 that is caused by the capillary force can be made efficient and fast. In addition, coating liquid retained in the pore 1 through the minute gap 2 can be transferred to the minute pore 3 without loss.

Next, a method for manufacturing the porous ceramics according to the present invention will be described. A first manufacturing method for porous ceramics according to the present invention includes the steps of forming a mixture comprising 100 parts by weight of heat resistant fiber with an average fiber diameter of 6 to 30μm and an average fiber length of 0.1 to 10mm, 5 to 300 parts by weight of inorganic bonding material, 1 to 100 parts by weight of organic bonding material, 1 to 300 parts by weight of water resistant granular organic material, and 50 to 300 parts by weight of water, molding the mixture, drying it, degreasing it, and baking it at 400 to 1500 °C. In the present invention, gaps formed between the fibers and the gaps formed by the evaporation of water make up the minute gaps in the porous ceramics. In addition, pores are formed by the disappearance of water resistant granular organic materials by burning.

Heat resistant fibers include similar materials as exemplified in the description of the porous ceramics. The heat resistant fibers have an average fiber diameter of 6 to 30 μm, preferably 10 to 20 μm, and an average fiber lengths of 0.1 to 10 mm, preferably 1 to 6 mm. It is preferred that the average fiber diameter and the average fiber length be in the above ranges, so that the oil migration power and the oil retaining power are both high. One type or a combination of two or more types of the above-mentioned heat resistant fibers may be used.

Inorganic bonding materials include similar materials as exemplified in the description of the porous ceramics. One type or a combination of two or more types of the aforementioned inorganic bonding materials may be used. The compound content of inorganic bonding material is 5 to 300 parts by weight, and preferably 30 to 100 parts by weight with respect to 100 parts by weight of heat resistant fiber. It is preferred that the compound content be in the above range so that the porous ceramics have high strength and the necessary minute gaps can be obtained.

Organic bonding materials are for adding strength to moldings in a state where a mixture of raw material for the porous ceramics according to the present invention is formed and dried, as well as for increasing the viscosity of the mixture for ease of molding. Organic bonding materials include, for example, methyl cellulose, carboxymethyl cellulose, hydroxymethyl cellulose, hydroxyethyl cellulose, polyvinyl alcohol, phenol resin, polyacrylic ester, polyacrylic sodium carbonate, and the like. One type or a combination of two or more types of the above-mentioned organic bonding materials may be used. The compound content of organic bonding material is 1 to 100 parts by weight, and preferably 5 to 30 parts by weight, with respect to 100 parts by weight of heat resistant fiber. It is preferred that the compound content be in the above range so that it has good elasticity at molding. Further, organic materials are lost when baked.

Although the water resistant granular organic material exists in granular form in the condition where the mixture of raw material of the porous ceramics according to the present invention is molded and dried, it is lost when baked, and thus pores are formed in the porous ceramics of the present invention. Water resistant granular organic materials include, for example, synthetic resin such as polyethylene, polypropylene, polystyrene, and acrylic resin, water resistant natural material such as wood, and substantially granular shaped materials as carbon powder. Of those materials, polyethylene grain is preferred because it is inexpensive and varies greatly in grain size. Also, granular synthetic resins may be in the form of foam material. The average grain size of the water resistant granular organic materials is 200 to 2000μm, and preferably 300 to 500μm. It is preferred that the average grain size be in the above range so that the coating liquid retaining power of the porous ceramics is high. One type or a combination of two or more types of the above-mentioned water resistant granular organic materials may be used. The compound content of the water resistant granular organic material is preferably 1 to 300 parts by weight with respect to 100 parts by weight of heat resistant fiber. The compound content may be changed in the above range to control the oil migration amount of the porous ceramics.

In the first manufacturing method for porous ceramics according to the present invention, first, the raw material is mixed with water to obtain the mixture. Although the compound content of water varies depending on the type of molding method, it should preferably be 50 to 300 parts by weight with respect to 100 parts by weight of heat resistant fibers. Next, the mixture is molded into a predetermined shape, either a bar, cylindrical, sheet, or other shape according to the application of the product. The molding method is not limited, and therefore may include, for example, extrusion molding, press molding, or the like. Next, the molded body is dried at ordinary temperature or by heating. At this time, water content is removed from the molded body and the gaps between fibers are formed. The drying condition adopted is such that the water content of the molded body becomes 5% or lower. For example, the drying temperature is usually 50 to 150°C, and preferably 80 to 120°C when drying the molded body by heating. It is preferred that the drying temperature be in the above range so that drying is possible in a short period of time without causing decomposition and loss of organic bonding material and water resistant granular organic material. Further, the humidity in the drying atmosphere may be adjusted as necessary in the event that deformation and cracks easily occur during drying of the molded body,.

Next, the porous ceramics according to the present invention are obtained by degreasing and then baking the dried molded body by electric furnace or the like. At this time, the water resistant granular organic materials and organic bonding materials in the molded body are lost and pores are formed in the spaces that were occupied by the water resistant granular organic material. Also, when degreasing, it is preferable that air is fed into the electric furnace or the like so as to remove vaporized water resistant granular organic materials and organic bonding materials outside the furnace while ensuring sufficient oxygen, so that pores can form sufficiently and uniformly. For degreasing, the temperature of the dried molded body is gradually raised from ordinary temperature to 300 to 400°C, and maintained at that temperature for 30 to 50 hours. The baking temperature is 400 to 1500°C, preferably 500 to 1000°C, and the baking time is 1 to 20 hours, preferably 2 to 10 hours. It is preferred that the baking temperature and the baking time be in the above ranges so that the strength of the porous ceramics is high and the cost is low.

Next, a second manufacturing method for porous ceramics according to the present invention will be described. In the second manufacturing method for porous ceramics according to the present invention, a mixture is formed which contains 100 parts by weight of heat resistant fiber with an average fiber diameter of 1 to 30 μm and an average fiber length of 0.03 to 100mm, 10 to 200 parts by weight of water resistant inorganic filler with an average grain size of 0.01 to 2mm, 5 to 300 parts by weight of inorganic bonding material, 1 to 100 parts by weight of organic bonding material, 1 to 300 parts by weight of water resistant granular organic material, and 50 to 300 parts by weight of water is molded, dried, degreased, and baked at 400 to 1500°C.

Heat resistant fibers include similar materials as exemplified in the description for the porous ceramics. The average fiber diameter of the heat resistant fiber is 1 to 30 μm, preferably 1 to 5μm, and the average fiber length is 0.03 to 100mm, preferably 1 to 50mm. It is preferred that the average fiber diameter and the average fiber length be in the above range so that the balance between oil retaining power and oil migration volume is good. One type or a combination of two or more types of above-mentioned heat resistant fibers may be used.

Water resistant inorganic fillers include similar materials as exemplified in the description for the porous ceramics. The average grain size of the water resistant inorganic filler is 0.01 to 2mm, preferably 0.05 to 0.5mm. It is preferable that the average diameter be in the above range in forming minute gaps with diameters of 30 to 200μm. One type or a combination of two or more types of water resistant inorganic filler may be used. The compound content of the water resistant inorganic filler is 10 to 200 parts by weight, preferably 50 to 100 parts by weight with respect to 100 parts by weight of heat resistant fiber. It is preferred that the compound content be in the above range for forming appropriate amount of minute gaps with diameters of 30 to 200μm.

Inorganic bonding materials include similar materials as exemplified in the description for porous ceramics. One type or a combination of two or more types of above inorganic bonding materials may be used. The compound content of inorganic bonding materials is 5 to 300 parts by weight, preferably 30 to 100 parts by weight, with respect to 100 parts by weight of heat resistant fiber. It is preferred that the compound content be in the above range so that the strength of the porous ceramics is high and the necessary minute gaps can be obtained.

Organic bonding materials include similar materials as exemplified in the description for the first manufacturing method for porous ceramics. One type or a combination of two or more types of above materials may be used. The compound content of the inorganic bonding material is 1 to 100 parts by weight, preferably 5 to 30 parts by weight with respect to 100 parts by weight of heat resistant fiber. It is preferred that the compound content be in the above range, so that it has good elasticity at molding. Further, the organic bonding materials are lost when baked.

Water resistant granular organic materials include similar materials as exemplified in the description for the first manufacturing method for porous ceramics. The water resistant granular organic material has average grain size of 200 to 2000μm, preferably 300 to 500μm. It is preferred that the average grain size be in the above range so that the holding power of the coating liquid is high. One type or combination of two or more types of the above-mentioned water resistant granular organic materials may be used. Compound content of the water resistant granular organic material is 1 to 300 parts by weight with respect to 100 parts by weight of heat resistant fiber. The compound content may be changed in the above range to control the oil migration amount of the porous ceramics.

According to the second manufacturing method for porous ceramics according to the present invention, raw materials to be compounded are different, but otherwise, steps similar to those employed in the first manufacturing method for porous ceramics, that is, mixing, molding, drying, and baking are followed to obtain the porous ceramics according to the present invention.

The porous ceramics of the present invention may be used as a coating liquid retaining member. Also, the coating liquid used has kinematic viscosity of 50 to 100000cSt, preferably 50 to 10000cSt, and more preferably 50 to 1000cSt.

A coating liquid application device can be obtained by forming a felt layer on a surface of the coating liquid retaining member, or, as shown in Fig. 3, by further forming a porous film layer on the felt layer. The minute pores formed between felt fibers of the felt used for the felt layer have an average diameter of 10 to 1000μm, preferably 10 to 100μm. An average diameter under 10μm is not desirable, because the felt density increases and flexibility becomes poor, leading to nonuniform application of the coating liquid. It is also not preferable that the average diameter exceed 1000μm, because the capillary force between the felt and the porous ceramics becomes insufficient, the coating liquid migration speed becomes low, and the oil retaining power deteriorates.

Porous film layers include, for example, PTFE and aramid fiber and other porous films. Among these, PTFE porous film is preferable because toner adhesion is low , the pore size is small and heat resistant performance is high.

The porous ceramics of the present invention may be used as the coating liquid retaining member which is a member of a coating liquid application device such as an electrostatic process copying machine and an electrophotographic printer.

Next, the present invention will be described more specifically by referring to the embodiments, however, these are examples only, and by no means limit the scope of the present invention.

Embodiments 1, 2, and comparative example 1

First, raw material mixture with the compound content as shown in Table 1 was mixed to obtain a mixture. Next, this mixture was molded into a cylindrical shape by extrusion molding. Then, it was dried at 105°C for 10 hours, and a hardened molded body was obtained. Further, this molded body was heated up to 400°C at 5°/hr for degreasing, and then baked at 800°C for 5 hours. Consequently, methyl cellulose and polyethylene powder were vaporized and lost to obtain cylindrical porous ceramics having an outside diameter of 22.5 mm, an inside diameter of 6 mm, and a length of 300 mm. When degreasing and baking, fresh air was constantly fed into the furnace to facilitate the elimination of methyl cellulose and polyethylene powder and to prevent the vaporized substances from stagnating in the furnace. Next, felt with a thickness of 2 mm, a weight of 525g/cm$^2$, and gaps about 100μm wide between fibers (Japan Felt Industrial Co., Ltd., Nomex felt) was wrapped around the porous ceramics. Further, a PTFE porous film with a thickness of 30μm, a porosity of 60%, and a maximum diameter of 10μm was adhered to the surface of the felt by a mixture of silicone oil and silicone varnish to obtain an oil application roller. For the oil application roller thus obtained, the porosity, total porosity, total minute pore volume of the minute gaps, as well as the coating liquid migration speed using dimethyl silicone oil (KF-96, oil viscosity 300cSt (25°C), manufactured by ShinEtsu) were measured. The results are shown in Table 1. The total minute pore volume of the minute gaps was measured with a mercury porosity meter (Pore Sizer 9320, manufactured by Micromeritics), and the coating liquid migration speed was measured as described below. The results of total minute pore volume of the minute gaps are also shown in Fig. 5.

(Measurement of coating liquid migration speed)

A felt was wrapped around porous ceramics 100% impregnated with dimethyl silicone oil and left stationary (25°C, 1 barometric pressure) for three days. Then, the amount of dimethyl silicone oil that had transferred to the felt was measured.

Table 1

| | | Embodiment 1 | Embodiment 2 | Comparative example 1 |
|---|---|---|---|---|
| Compound Content | Heat resistant fiber (parts by weight) | 100 | 100 | 100 |
| | Material and form | E glass Chopped strand | E glass Milled glass | Aluminocilicate fiber |
| | Average fiber diameter | 13μm | 10μm | 3μm |
| | Average fiber length | 3mm | 150μm | 5mm |
| | Water resistant inorganic filler (parts by weight) | - | 50 | - |
| | Material | - | Silica powder | - |
| | Average grain size | - | 50μm | - |
| | Sodium silicate (parts by weight) | 30 | 30 | 30 |
| | Methyl cellulose (parts by weight) | 20 | 20 | 20 |
| | Polyethylene powder*1 (parts by weight) | 100 | 100 | 100 |
| | Water (parts by weight) | 200 | 200 | 200 |
| Average pore size (μm) | | 400 | 400 | 400 |
| Porosity (%) *2 | | 30 | 30 | 30 |
| Total porosity (%) | | 75 | 75 | 75 |
| Total minute | Less than 30μm | 37 | 49 | 68 |
| pore volume of minute gaps (%) *3 | 30μm or more | 63 | 51 | 32 |
| Coating liquid migration speed (g/3 day) | | 24.8 | 17.2 | 5.5 |

*1 Average grain size: 400μm

*2 Indicates the percentage of pores in the porous ceramics

*3 Measurement range of 1 to 200μm

From Table 1 and Fig. 5, it is evident that in the first embodiment, 63% of the minute gaps have a pore size of 30 to 200μm, in the second embodiment, 51%, and in the comparative example, 32%. Furthermore, it is apparent that the coating liquid migration speed is faster when the total minute gap volume is 40% or more.

The porous ceramics according to the present invention are used as a coating liquid retaining member. Using this coating liquid retaining member, it is possible to maintain a state where the felt layer is constantly soaked with coating liquid because the coating liquid migration speed to the felt layer is fast. Also, it is possible to evenly and efficiently transfer coating liquid retained in the porous ceramics to the felt layer. Further, it is possible to transfer coating liquid retained in the porous ceramics to thefelt layer without waste. Therefore, it is possible to obtain a coating liquid application device capable of stably applying a constant amount of coating liquid over a long time.

## Claims

1.  Porous ceramics which is made of heat resistant inorganic material with minute gaps and pores on the inside, wherein at least some of the minute gaps communicate with a surface and the pores of the porous ceramics and 40% or more of a total minute gap volume consists of minute pores with diameters of 30 to 200μm, and at least some of the pores communicate with the porous ceramics surface through the minute gaps and the pores have an average pore size of 200 to 2000μm.

2.  Porous ceramics according to claim 1, wherein the heat resistant inorganic material is made of heat resistant fibers and inorganic bonding material or of heat resistant fibers and water resistant filler and inorganic bonding material, and the minute gaps are formed by bonding of the heat resistant fibers with the inorganic bonding material, or by bonding of the heat resistant fibers and water resistant filler with the inorganic bonding material.

3. A coating liquid retaining member which is made of the porous ceramics according to claim 1 or 2.

4. A coating liquid retaining member according to claim 3, wherein the coating liquid retaining member is for coating liquid with a kinematic viscosity of 50 to 100000cSt at 25°C.

5. A coating liquid application device, wherein a felt layer is formed on a surface of the coating liquid retaining member according to claim 3 or 4.

6. The coating liquid application device according to claim 5, wherein a PTFE porous film layer is formed on the surface of the felt layer.

7. A manufacturing method for porous ceramics, comprising the steps of forming a mixture comprising 100 parts by weight of heat resistant fiber with an average fiber diameter of 6 to 30μm and an average fiber length of 0.1 to 10mm, 5 to 300 parts by weight of inorganic bonding material, 1 to 100 parts by weight of organic bonding material, 1 to 300 parts by weight of water resistant granular organic material, and 50 to 300 parts by weight of water, molding the mixture, drying it, degreasing it, and baking it at 400 to 1500°C.

8. A manufacturing method for porous ceramics, comprising the steps of forming a mixture comprising 100 parts by weight of heat resistant fiber with an average fiber diameter of 1 to 30μm and an average fiber length of 0.03 to 100mm, 10 to 200 parts by weight of water resistant inorganic filler with an average grain size of 0.01 to 2mm, 5 to 300 parts by weight of inorganic bonding material, 1 to 100 parts by weight of organic bonding material, 1 to 300 parts by weight of water resistant granular organic material, and 50 to 300 parts by weight of water, molding the mixture, drying it, degreasing it, and baking it at 400 to 1500°C.

**Fig. 1**

**Fig. 2**

**Fig. 3**

**Fig. 4**

Capillary force P

# Fig. 5

**EP 1 099 674 A1**

European Patent Office

**EUROPEAN SEARCH REPORT**

Application Number

EP 00 12 2773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br><br>D | EP 0 753 356 A (NICHIAS CORP ;ZENITH CORP (JP)) 15 January 1997 (1997-01-15)<br>* page 2, line 45 – line 48 *<br>* page 4, line 2 – line 6; claims; examples *<br>& JP 09 108601 A<br>28 April 1997 (1997-04-28)<br>--- | 1-5,7,8 | C04B38/00<br>G03G15/20<br>B05C1/00<br>C04B30/02 |
| D,P,<br>A | EP 0 969 334 A (ZENITH CORP ;NICHIAS CORP (JP)) 5 January 2000 (2000-01-05)<br>* claims; figures *<br>--- | 1,3-6 | |
| A | WO 98 32599 A (BMP AMERICA INC)<br>30 July 1998 (1998-07-30)<br>* page 14 – page 15; example 1 *<br>--- | 3-6 | |
| X<br><br>A | US 5 902 653 A (MOTOYOSHI YOSHIYUKI ET AL) 11 May 1999 (1999-05-11)<br>* column 2, line 21 – column 3, line 30 *<br>----- | 7,8<br><br>1-5 | TECHNICAL FIELDS SEARCHED (Int.Cl.7)<br><br>C04B<br>G03G<br>B05C |

The present search report has been drawn up for all claims

| Place of search | Date of completion of the search | Examiner |
|---|---|---|
| THE HAGUE | 9 February 2001 | Theodoridou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 12 2773

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2001

| Patent document cited in search report | | Publication date | Patent family member(s) | | Publication date |
|---|---|---|---|---|---|
| EP 0753356 | A | 15-01-1997 | JP | 2869707 B | 10-03-1999 |
| | | | JP | 9011342 A | 14-01-1997 |
| | | | JP | 2896651 B | 31-05-1999 |
| | | | JP | 9108601 A | 28-04-1997 |
| | | | CN | 1146934 A | 09-04-1997 |
| | | | US | 5876640 A | 02-03-1999 |
| EP 0969334 | A | 05-01-2000 | JP | 2000079365 A | 21-03-2000 |
| | | | AU | 3796199 A | 20-01-2000 |
| | | | CN | 1247330 A | 15-03-2000 |
| | | | JP | 2000310920 A | 07-11-2000 |
| WO 9832599 | A | 30-07-1998 | EP | 0961685 A | 08-12-1999 |
| | | | US | 6054399 A | 25-04-2000 |
| US 5902653 | A | 11-05-1999 | JP | 7197930 A | 01-08-1995 |
| | | | US | 5800745 A | 01-09-1998 |

EPO FORM P0459

For more details about this annex : see Official Journal of the European Patent Office, No. 12/82